# EUROPÄISCHE PATENTSCHRIFT

(11) **EP 2 217 818 B1**
(45) Veröffentlichungstag und Bekanntmachung des Hinweises auf die Patenterteilung: **20.08.2014**
(21) Anmeldenummer: 08860845.0
(22) Anmeldetag: 09.12.2008
(51) Int. Cl.: F16C 27/06, F16C 35/077, B62D 3/12

(54) **RADIALBEWEGLICHES LOSLAGER**
RADIALLY MOBILE FLOATING BEARING
PALIER LIBRE À DÉPLACEMENT RADIAL

(30) Priorität: 14.12.2007 DE 102007055814
(43) Veröffentlichungstag der Anmeldung: 18.08.2010
(73) Patentinhaber: ZF Lenksysteme GmbH, 73527 Schwäbisch Gmünd (DE)
(72) Erfinder: HAFERMALZ, Jens-Uwe, 73116 Wäschenbeuren (DE); FÜCHSEL, Dennis, 73525 Schwäbisch Gmünd (DE)
(86) Internationale Anmeldenummer: PCT/EP2008/067106
(87) Internationale Veröffentlichungsnummer: WO 2009/077382

(56) Entgegenhaltungen:
- EP-A1- 1 679 447
- DE-A1-102005 035 020
- US-A1- 2003 127 277

## Beschreibung

Die Erfindung betrifft ein radialbewegliches Loslager für eine Welle eines Getriebes eines Lenksystems nach dem Oberbegriff des Anspruchs 1.

In Getrieben von Lenksystemen, insbesondere in Zahnstangenlenkgetrieben oder Schraubradgetrieben oder Schneckenradgetrieben, sind Wellen mit treibenden Rädern, wie Ritzel oder Schnecken, in einem Festlager und einem radialbeweglichen Loslager gelagert. Das Loslager weist dabei einen Freiheitsgrad auf, der es gestattet, mit Hilfe einer Anpressvorrichtung das treibende Rad spielfrei auf dem getriebenen Rad oder einer Zahnstange abrollen oder abwälzen zu lassen. Die Anpressvorrichtung dient zudem zur Kompensation von Verschleiß zwischen dem treibenden und getriebenen Rad oder der entsprechenden Verzahnung zwischen den Rädern. Insbesondere bei einem Drehrichtungswechsel der Wellen, bei Lenkgetrieben bei einem Fahrtrichtungswechsel etwa, führt dies zu einer Geräuschbildung.

Die US 2004/0084865 A1 beschreibt ein elektrisches Lenksystem, dessen Aktuator ein Elektromotor mit einem angeflanschten Schneckenradgetriebe bildet. Eine Welle, die drehfest mit einer Zylinderschnecke in einem Getriebegehäuse angeordnet ist, ist über zwei Wälzlager als Festlager gelagert. Um eine Geräuschbildung der Verzahnung zwischen der Zylinderschnecke und dem Schneckenrad zu vermeiden, schlägt die Druckschrift vor, eine elastische Kupplungsschicht zwischen der Welle und der Zylinderschnecke anzuordnen. Diese konstruktive Maßnahme ist herstellungstechnisch aufwändig und damit lässt sich Verschleiß in der Verzahnung nicht kompensieren.

Die DE 10 2005 035 020 A1 zeigt und beschreibt ein gattungsgemäßes, radialbewegliches Loslager für eine Welle eines Getriebes eines Lenksystems, mit einer Buchse oder Innenring, der sich in einer Aufnahme eines Lenkgetriebegehäuses abstützt, wobei der Innenring durch mindestens ein in einem Spalt zwischen der Aufnahme und dem Innenring eingefügtes Stützelement aus einem elastomeren Werkstoff gehalten ist, welches ein Schwenklager bildet.

Beim Betrieb eines solchen radialbeweglichen Loslagers ist ein Anschlagen des Innenrings an der Aufnahme und eine Geräuschbildung nicht sicher verhindert.

Der Erfindung liegt die Aufgabe zugrunde, ein radialbewegliches Loslager für eine Welle eines Getriebes eines Lenksystems zu schaffen, das geräuscharm, leicht schwenkbar und hoch belastbar ist.

Die Aufgabe wird mit einem radialbeweglichen Loslager mit den Merkmalen des Anspruchs 1 gelöst.

Dadurch dass das Schwenklager mit einem tangential zu diesem beabstandeten oder gegenüberliegenden Dämpfungsanschlag zusammenwirkt, wobei der Dämpfungsanschlag mit radialem Abstand zu dem Innenring oder der Aufnahme angeordnet ist und der Dämpfungsanschlag vor der Montage des radialbeweglichen Loslagers in ein Gestell einen radial von dem Innenring wegragenden, aus der Umfangsfläche der Aufnahme herausragenden Wulst aufweist, der nach der Montage des radialbeweglichen Loslagers in entgegengesetzte Richtung zu dem Innenring ragt und der mit radialem Abstand zu dem Innenring angeordnet ist, ist eine Geräuschbildung des radialbeweglichen Loslagers sicher verhindert.

Bevorzugte Ausführungen ergeben sich aus den Unteransprüchen.

Der Dämpfungsanschlag ist bevorzugt als flächiges Gebilde im Längsschnitt kreisabschnittsartig gebildet und auf einer Innenumfangsfläche der Aufnahme oder des Gestells angeordnet. Er ist bevorzugt als Formkörper, der durch in ein oder mehrere Öffnungen in der Aufnahme und/oder in dem Gestell eingespritzten Elastomerwerkstoff gebildet, wobei der Elastomerwerkstoff sich in den Öffnungen verzahnt und in Hinterschnitten gehalten wird.

Der radiale Abstand des Dämpfungsanschlags zu dem Innenring des radialbeweglichen Loslagers ist im Betrieb des radialbeweglichen Loslagers vorzugsweise höchstens 0,1 mm, kann aber betriebsbedingt auch höher liegen.

Der Abstand kann bevorzugt auch erst bei und nach der Montage des radialbeweg lichen Loslagers in der Aufnahme oder in dem Gehäuse oder bei oder nach der Montage des Wälzlagers in dem Innenring fixiert werden

Das Schwenklager und/oder der Dämpfungsanschlag können formschlüssig und/oder stoffschlüssig in der Aufnahme oder dem Gestell festgelegt sein,
wobei es zweckmäßig sein kann, eine um den Umfang des Dämpfungsanschlags geformte Schwalbenschwanzführung oder eine schwalbenschwanzähnliche Führung vorzusehen. Das Schwenklager kann auch formschlüssig und/oder stoffschlüssig in dem Innenring festgelegt sein.

Tangential entlang der Aufnahmeninnenseite erstreckt sich der Dämpfungsanschlag über einen Umfangsabschnitt von etwa 1/6 des Gesamtumfangs des Innenrings. Auch das Schwenklager selbst kann aus durch ein oder mehrere Öffnungen in der Aufnahme und/oder in dem Gestell und/oder in dem Innenring eingespritzten Elastomerwerkstoff gebildet sein. Die Aufnahme und/oder der Innenring und/oder die Buchse lassen sich aus Kunststoff oder Metall bilden.

Das Schwenklager und der Dämpfungsanschlag sind bevorzugt aus demselben Elastomerwerkstoff gebildet.

Ein Ausführungsbeispiel ist nachstehend anhand der Zeichnung gezeigt. In der Zeichnung zeigt:
Fig. 1 einen schematischen Querschnitt durch ein radialbewegliches Loslager eines Getriebes eines Lenksystems,
Fig. 2 einen weiteren Querschnitt durch ein radialbewegliches Loslager,
Fig. 3 einen Längsschnitt durch ein Detail IV in Fig. 2 vor der Montage des radialbeweglichen Loslagers,
Fig. 4 einen Längsschnitt durch das radialbewegliche Loslager nach der Montage,

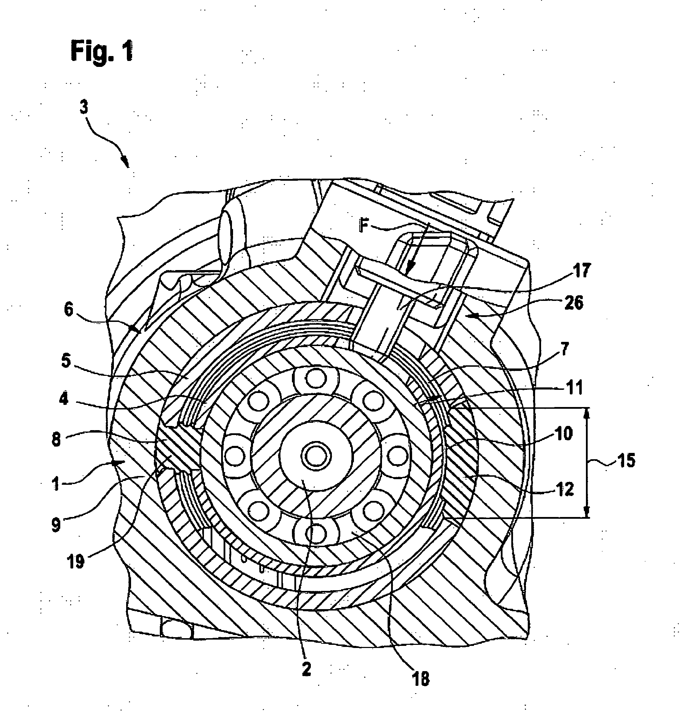

In Fig. 1 ist in einem schematischen Querschnitt durch ein Gestell 6 oder Gehäuse eines Getriebes 3 ein radialbewegliches Loslager 1 gezeigt, das zur Lagerung einer Welle 2 dient, die eine nicht gezeigte Schnecke des als Schneckenradgetriebes ausgebildeten Getriebes 3 trägt und mit der die Welle 2 drehfest verbunden ist. Das radialbewegliche Loslager 1 ist in einer Aufnahme 5 des Getriebes 3 angeordnet und wird von einer teilweise dargestellten Anpressvorrichtung 26, genauer von einem Druckstück 17 in radialer Richtung x mit einer Anpresskraft F beaufschlagt. Durch die Kraft F wird die Schnecke an der Welle 2 auf eine Verzahnung eines nicht gezeigten Schneckenrades gepresst.

Das radialbewegliche Loslager 1 ist als Wälzlager 18 ausgebildet, wobei ein Aussenring des Wälzlagers 18 in einem Innenring 4 an einem Stützelement 8 aus elastomerem Werkstoff, an der Aufnahme 5 schwenkbar gehalten ist. Das Stützelement 8 bildet ein Schwenklager 9 mit einer Schwenkachse 19, die durch das Stützelement 8 läuft, wobei sich der Innenring 4 innerhalb eines Spalts 7 zwischen der Aufnahme 5 und dem Innenring 4 bewegen kann. Das Stützelement 8 bildet auf diese Weise ein Schwenklager 9 für das radialbewegliche Loslager 1.

Das Stützelement 8 dient dazu, Querkräfte, quer zu dem durch den Pfeil dargestellten Freiheitsgrad des radialbeweglichen Loslager 1, insbesondere bei einem Drehrichtungswechsel der Welle 2 und der darauf festgelegten Schnecke, abzustützen. Das Stützelement 8 überträgt Zug und Druck, wobei ein eventuelles Anschlagen des Innenrings 4 an einer Innenumfangsfläche 11 der Aufnahme 5 durch einen Dämpfungsanschlag 10 bedämpft wird. Der Dämpfungsanschlag 10 wird durch

ein Element 12 mit elastomeren Eigenschaften gebildet, das in dem Ausführungsbeispiel in den Figuren 1 bis 4 über einen Umfangsabschnitt 15 von etwa 1/6 des Gesamtumfangs der Aufnahme 5 geführt ist.

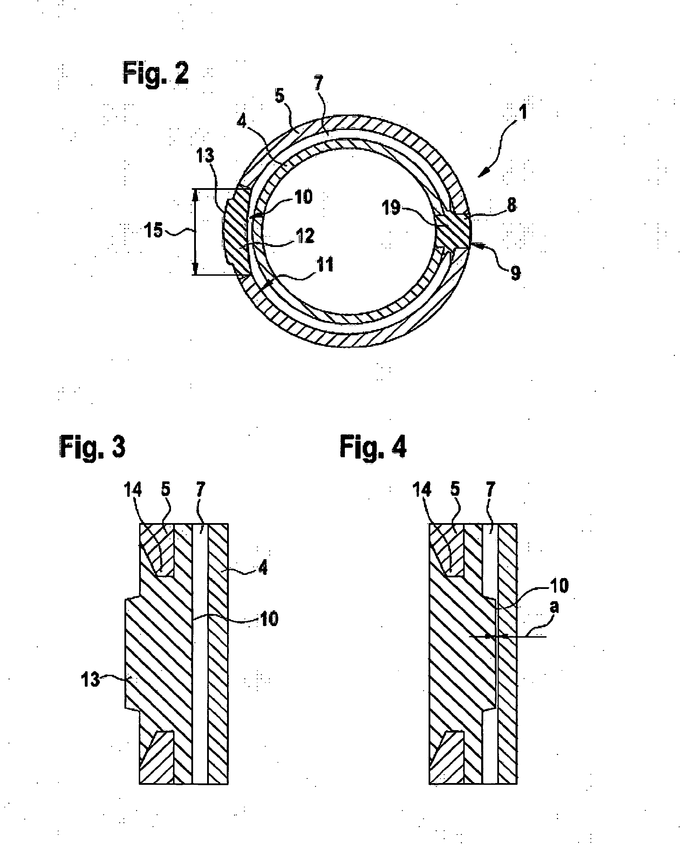

Der Dämpfungsanschlag 10 ist, wie Fig. 3 zeigt, formschlüssig in der Art einer Schwalbenschwanzführung 14 in der ringförmigen Aufnahme 5 gehalten. Wie ein Vergleich der Figuren 2 und 3 mit der Figur 4 zeigt, ist der Dämpfungsanschlag 10 im nicht montierten Zustand konvex mit einem Wulst 13 nach außen aus der Aufnahme 5 ragend und wird erst durch das Einsetzen der Aufnahme 5 in das Gestell 6 (vgl. Fig. 4) radial in Richtung auf den Innenring 4 gedrückt, wobei ein radialer Abstand a von beispielweise 0,1 mm zwischen dem Dämpfungsanschlag 10 und dem Innenring 4 verbleibt.

## Patentansprüche

1. Radialbewegliches Loslager für eine Welle (2) eines Getriebes (3) eines Lenksystems, mit einer Buchse oder einem Wälzlager (18) in einem Innenring (4), der sich in einer Aufnahme (5) eines Gestells (6) oder Gehäuses des Getriebes (3) abstützt, wobei der Innenring (4) durch mindestens ein in einem Spalt (7) zwischen der Aufnahme (5) und dem Innenring (4) eingefügten Stützelement (8) aus einem Werkstoff mit elastomerem Verhalten gehalten ist, wobei das Stützelement (8) ein Schwenklager mit einer Schwenkachse (19), die durch das Stützelement (8) läuft, bildet, und wobei das Stützelement (8) mit einem Dämpfungsanschlag (10), der mit elastomeren Eigenschaften gebildet und an einem annähernd gegenüberliegenden Umfangsabschnitt der Aufnahme (5) integriert ist, zusammenwirkt, **dadurch gekennzeichnet, dass** der Dämpfungsanschlag (10) vor der Montage des radialbeweglichen Loslagers (1) in das Gestell (6) einen radial von dem Innenring (4) wegragenden, aus der Umfangsfläche der Aufnahme (5) herausragenden Wulst (13) aufweist, der nach der Montage des radialbeweglichen Loslagers (1) in entgegengesetzte Richtung zu dem Innenring (4) ragt und der mit radialem Abstand (a) zu dem Innenring (4) angeordnet ist.

2. Radialbewegliches Loslager nach Anspruch 1, **dadurch gekennzeichnet, dass** der Dämpfungsanschlag (10) durch Formschluß und/oder Stoffschluß in der Aufnahme (5) gehalten ist.

3. Radialbewegliches Loslager nach Anspruch 1 oder 2, **dadurch gekennzeichnet, dass** der Dämpfungsanschlag (10), durch in eine oder mehrere Öffnungen in der Aufnahme (5) eingespritzten Elastomerwerkstoff gebildet ist.

4. Radialbewegliches Loslager nach einem der Ansprüche 1 bis 3, **dadurch gekennzeichnet, dass** der Dämpfungsanschlag (10) kreisabschnittsartig gebildet ist und auf einer Innenumfangsfläche (11) der Aufnahme (5) angeordnet ist.

5. Radialbewegliches Loslager nach einem der Ansprüche 1 bis 4, **dadurch gekennzeichnet, dass** der radiale Abstand (a) des Dämpfungsanschlags (10) zu dem Innenring (4) des radialbeweglichen Loslagers (1) höchstens etwa 0,1 mm beträgt.

6. Radialbewegliches Loslager nach einem der Ansprüche 1 bis 5, **dadurch gekennzeichnet, dass** der Dämpfungsanschlag (10) in der Art einer Schwalbenschwanzführung (14) in der Aufnahme (5) gehalten ist.

7. Radialbewegliches Loslager nach einem der Ansprüche 1 bis 6, **dadurch gekennzeichnet, dass** der Dämpfungsanschlag (10) sich tangential über einen Umfangsabschnitt (15) von höchstens etwa 1/6 des Gesamtumfangs des Innenrings (4) erstreckt.

8. Radialbewegliches Loslager nach einem der Ansprüche 1 bis 7, **dadurch gekennzeichnet, dass** das Stützelement (8) durch in eine oder mehrere Öffnungen in der Aufnahme (5) und/oder den Innenring (4) eingespritzten Elastomerwerkstoff gebildet ist.

9. Radialbewegliches Loslager nach einem der Ansprüche 1 bis 8, **dadurch gekennzeichnet, dass** das schwenkbare Stützelement (8) durch Formschluß und/oder Stoffschluß in der Aufnahme (5) und/oder in dem Innenring (4) gehalten ist.

10. Radialbewegliches Loslager nach einem der Ansprüche 1 bis 9, **dadurch gekennzeichnet, dass** die Aufnahme (5) und/oder der Innenring (4) aus einem Kunststoff oder einem Metall besteht.

11. Radialbewegliches Loslager nach einem der Ansprüche 1 bis 11, **dadurch gekennzeichnet, dass** der Dämpfungsanschlag (10) und das Schwenklager (9) aus demselben Elastomerwerkstoff gebildet sind.

## Claims

1. Radially mobile floating bearing for a shaft (2) of a gear (3) of a steering system, with a bush or a rolling bearing (18) in an inner ring (4) which is supported in a receptacle (5) on a frame (6) or housing of the gear (3), the inner ring (4) being held by means of at least one supporting element (8) inserted in a gap (7) between the receptacle (5) and the inner ring (4) and made from a material having elastomeric behaviour, the supporting element (8) forming a pivot bearing with a pivot axis (19) which runs through the supporting element (8), and the supporting element (8) cooperating with a damping stop (10) which is formed with elastomeric properties and which is integrated on an approximately opposite circumferential portion of the receptacle (5), **characterized in that**, before the radially mobile floating bearing (1) is mounted in the frame (6), the damping stop (10) has a bolster (13) which projects radially away from the inner ring (4) and projects out of the circumferential surface of the receptacle (5) and which, after the mounting of the radially mobile floating bearing (1), projects in the opposite direction towards the inner ring (4) and is arranged with a radial clearance (a) in relation to the inner ring (4).

2. Radially mobile floating bearing according to Claim 1, **characterized in that** the damping stop (10) is held in the receptacle (5) by positive connection and/or by materially integral connection.

3. Radially mobile floating bearing according to Claim 1 or 2, **characterized in that** the damping stop (10) is formed by elastomeric material injected into one or more orifices in the receptacle (5).

4. Radially mobile floating bearing according to one of Claims 1 to 3, **characterized in that** the damping stop (10) is formed in the manner of a segment of a circle and is arranged on an inner circumferential surface (11) of the receptacle (5).

5. Radially mobile floating bearing according to one of Claims 1 to 4, **characterized in that** the radial clearance (a) of the damping stop (10) in relation to the inner ring (4) of the radially mobile floating bearing (1) amounts at most to about 0.1 mm.

6. Radially mobile floating bearing according to one of Claims 1 to 5, **characterized in that** the damping stop (10) is held in the receptacle (5) in the manner of a dovetail guide (14).

7. Radially mobile floating bearing according to one of Claims 1 to 6, **characterized in that** the damping stop (10) extends tangentially over a circumferential portion (15) of at most about 1/6 of the total circumference of the inner ring (4).

8. Radially mobile floating bearing according to one of Claims 1 to 7, **characterized in that** the supporting element (8) is formed by elastomeric material injected into one or more orifices in the receptacle (5) and/or the inner ring (4).

9. Radially mobile floating bearing according to one of Claims 1 to 8, **characterized in that** the pivotable supporting element (8) is held in the receptacle (5) and/or in the inner ring (4) by positive connection and/or materially integral connection.

10. Radially mobile floating bearing according to one of Claims 1 to 9, **characterized in that** the receptacle (5) and/or the inner ring (4) are/is composed of a plastic or a metal.

11. Radially mobile floating bearing according to one of Claims 1 to 11, **characterized in that** the damping stop (10) and the pivot bearing (9) are formed from the same elastomeric material.

## Revendications

1. Palier libre à déplacement radial pour un arbre (2) d'une transmission (3) d'un système de direction, comprenant une douille ou un palier à roulement (18) dans une bague interne (4), qui s'appuie dans un logement (5) d'un bâti (6) ou du boîtier de la transmission (3), la bague interne (4) étant retenue par au moins un élément de support (8) en un matériau à propriétés élastomères introduit dans une fente (7) entre le logement (5) et la bague interne (4), l'élément de support (8) formant un palier pivotant avec un axe de pivotement (19) qui s'étend à travers l'élément de support (8), et l'élément de support (8) coopérant avec une butée d'amortissement (10) qui est formée avec des propriétés élastomères et qui est intégrée à une portion périphérique du logement (5) approximativement opposée, **caractérisé en ce que** la butée d'amortissement (10), avant le montage du palier libre à déplacement radial (1) dans le bâti (6), présente un bourrelet (13) faisant saillie radialement à l'écart de la bague interne (4), saillant hors de la surface périphérique du logement (5), qui, après le montage du palier libre à déplacement radial (1), fait saillie dans la direction opposée vers la bague interne (4) et qui est disposé à distance radiale (a) par rapport à la bague interne (4).

2. Palier libre à déplacement radial selon la revendication 1, **caractérisé en ce que** la butée d'amortissement (10) est retenue dans le logement (5) par engagement par correspondance de forme et/ou par liaison de matière.

3. Palier libre à déplacement radial selon la revendication 1 ou 2, **caractérisé en ce que** la butée d'amortissement (10) est formée par un matériau élastomère injecté dans une ou plusieurs ouvertures dans le logement (5).

4. Palier libre à déplacement radial selon l'une quelconque des revendications 1 à 3, **caractérisé en ce que** la butée d'amortissement (10) est formée sous forme de portion de cercle et est disposée sur une surface périphérique interne (11) du logement (5).

5. Palier libre à déplacement radial selon l'une quelconque des revendications 1 à 4, **caractérisé en ce que** la distance radiale (a) de la butée d'amortissement (10) à la bague interne (4) du palier libre à déplacement radial (1) mesure au maximum environ 0,1 mm.

6. Palier libre à déplacement radial selon l'une quelconque des revendications 1 à 5, **caractérisé en ce que** la butée d'amortissement (10) est retenue à la manière d'un guidage en queue d'aronde (14) dans le logement (5).

7. Palier libre à déplacement radial selon l'une quelconque des revendications 1 à 6, **caractérisé en ce que** la butée d'amortissement (10) s'étend tangentiellement sur une portion périphérique (15) mesurant au maximum environ 1/6 de la périphérie totale de la bague interne (4).

8. Palier libre à déplacement radial selon l'une quelconque des revendications 1 à 7, **caractérisé en ce que** l'élément de support (8) est formé par un matériau élastomère injecté dans une ou plusieurs ouvertures dans le logement (5) et/ou dans la bague interne (4).

9. Palier libre à déplacement radial selon l'une quelconque des revendications 1 à 8, **caractérisé en ce que** l'élément de support pivotant (8) est retenu dans le logement (5) et/ou dans la bague interne (4) par engagement par correspondance de forme et/ou par liaison de matière.

10. Palier libre à déplacement radial selon l'une quelconque des revendications 1 à 9, **caractérisé en ce que** le logement (5) et/ou la bague interne (4) se composent de plastique ou de métal.

11. Palier libre à déplacement radial selon l'une quelconque des revendications 1 à 11, **caractérisé en ce que** la butée d'amortissement (10) et le palier pivotant (9) sont formés du même matériau élastomère.
